# EUROPÄISCHE PATENTSCHRIFT

(11) **EP 2 906 911 B1**
(45) Veröffentlichungstag und Bekanntmachung des Hinweises auf die Patenterteilung: **02.05.2018**
(21) Anmeldenummer: 13763091.9
(22) Anmeldetag: 19.09.2013
(51) Int. Cl.: G01D 5/353, H01F 27/40

(54) **HOCHSPANNUNGSTRANSFORMATOR MIT SENSORSYSTEM UND VERFAHREN ZUR ÜBERWACHUNG VON PHYSIKALISCHEN KENNGRÖSSEN EINES HOCHSPANNUNGSTRANSFORMATORS**
HIGH VOLTAGE TRANSFORMER WITH SENSOR SYSTEM AND METHOD OF MONITORING PHYSICAL PARAMETERS OF A HIGH VOLTAGE TRANSFORMER
TRANSFORMATEUR HAUTE TENSION AVEC SYSTEME DE CAPTEURS ET PROCEDE DE SURVEILLANCE DE PARAMETRES PHYSIQUES D'UN TRANSFORMATEUR HAUTE TENSION

(30) Priorität: 10.10.2012 DE 102012109640
(43) Veröffentlichungstag der Anmeldung: 19.08.2015
(73) Patentinhaber: Maschinenfabrik Reinhausen GmbH, 93059 Regensburg (DE)
(72) Erfinder: HINZ, Ansgar, 42799 Leichlingen (DE); MICKSCH, Frank, 61440 Oberursel (DE)
(86) Internationale Anmeldenummer: PCT/EP2013/069449
(87) Internationale Veröffentlichungsnummer: WO 2014/056696

(56) Entgegenhaltungen:
- CN-A- 102 589 747
- CN-U- 201 892 586
- TEUNISSEN J ET AL: "Stability of fiber Bragg grating sensors for integration into high-voltage transformers for online monitoring", 2002 15TH OPTICAL FIBER SENSORS CONFERENCE TECHNICAL DIGEST. OFS 2002(CAT. NO.02EX533), IEEE, IEEE PISCATAWAY, NJ, USA, 10. Mai 2002 (2002-05-10), Seiten 541-544vol.1, XP032407670, DOI: 10.1109/OFS.2002.1000770 ISBN: 978-0-7803-7289-4

## Beschreibung

Die Erfindung betrifft einen Hochspannungstransformator mit Sensorsystem zur Überwachung von physikalischen Kenngrößen. Insbesondere weist das Sensorsystem mindestens einen Sensor auf, der eine Glasfaser mit einem Sensorkopf umfasst. Der Sensorkopf trägt mehrere Bragg-Gitter. Dem Sensorsystem ist eine Auswerteeinheit zugeordnet, die über die Glasfaser mit dem mindestens einen Sensorkopf verbunden ist.

Die Erfindung betrifft weiterhin ein Verfahren zur Überwachung von physikalischen Kenngrößen eines Hochspannungstransformators.

Die Veröffentlichung Helmig, C.; Peier, D.: Alternative Technologien zur Messung wichtiger Betriebskenngrössen in Energienetzen, Elektrie, Berlin 53 (1999) A, Sonderausgabe 9/99, Seite 342 ff beschreibt die Verwendung von faseroptischen Bragg-Gittem zur Temperaturmessung. Mit Faser-Bragg-Gitter wird dabei der Bereich periodisch angeordneter Schichten unterschiedlicher Brechzahlen in der Kernstruktur eines Monomode-Lichtwellenleiters bezeichnet. Dieser Bereich wird bei der Herstellung durch Belichtung der Faser mit hinreichend kurzwelligem UV-Licht über eine Belichtungsmaske erzeugt. Die Fotoempfindlichkeit des aus GeO₂ - dotiertem Quarzglas bestehenden Faserkernes ermöglicht die Veränderung der effektiven Brechzahl n_{eff} des optischen Mediums an den streng periodisch angeordneten Belichtungsstellen im Abstand λ_{BG}. Dies ist in der Veröffentlichung Bludau, W.: Lichtwellenleiter in Sensorik und optischer Nachrichtentechnik, Springer Verlag Berlin Heidelberg New York, (VDI-Buch), 1998 ausführlich beschrieben. Durch die Veränderung der Kernstruktur der Glasfaser wird die Lichtausbreitung im Faserkern beeinflusst. Ein einfallendes breitbandiges Lichtspektrum erfährt durch die erzeugte Modulation der effektiven Brechzahl eine Streuung an der Struktur des Faser-Bragg-Gitters. Für eine bestimmte Wellenlänge des im Monomode-Lichtwellenleiter geführten Lichtes ist die reflektierte Lichtquelle wieder in Phase und überlagert sich. Faser-Bragg-Gitter wirken daher wie ein wellenlängenselektiver Spiegel.

Durch ihre charakteristische Geometrie weisen Faser-Bragg-Gitter also ein wellenlängenselektives Verhalten auf. Nur die jeweilige Bragg-Wellenlänge wird schmalbandig reflektiert. Da diese Eigenschaft sensitiv gegenüber äußeren Einflussgrößen, wie Temperatur bzw. Dehnung des Gitters, ist, können Faser-Bragg-Gitter für sensorische Anwendungen, insbesondere auch zur Temperaturerfassung, eingesetzt werden. Die Signalauswertung beschränkt sich dabei auf eine sehr exakte Wellenlängendetektion im nm-Bereich. Die Bragg-Reflexionswellenlänge ist dabei direkt von der Glasfasertemperatur und damit der Temperatur in der Umgebung der Glasfaser, etwa in einem elektrischen Betriebsmittel, abhängig.

Es ist auch bereits vorgeschlagen worden, in einer Glasfaser mehrere, unabhängig voneinander wirkende Faser-Bragg-Gitter vorzusehen. Dies ist möglich, da auf Grund der geringen Verschiebung der Bragg-Reflexionswellenlänge bei Temperaturvariation im interessierenden Messbereich bei Verwendung einer breitbandigen Lichtquelle eine Identifizierung der verschiedenen Bragg-Gitter möglich ist. Somit können Bragg-Gitter an verschiedenen Positionen in eine Glasfaser eingeschrieben und damit an unterschiedlichen Stellen in einem elektrischen Betriebsmittel platziert werden. Die einzelnen Bragg-Gitter besitzen dabei jeweils eine unterschiedliche spezifische Bragg-Reflexionswellenlänge λ_{BG}, womit eine definierte Zuordnung einer ermittelten Temperatur zur jeweiligen Messstelle im elektrischen Betriebsmittel gewährleistet ist.

Die lineare Abhängigkeit der Reflexionswellenlänge von der Glasfasertemperatur kann durch Detektion der jeweils vorherrschenden Wellenlänge bei Temperaturvariation mit Hilfe eines kommerziellen optischen Spektrumanalysators, beispielsweise der Typen HP 71450B, 7125B, 71452B und 86140A des Herstellers Hewlett Packard oder eines Gerätes der Serie "WA" des "Burleigh" messtechnisch erfasst werden. Nachteilig für den Einsatz im Bereich der faseroptischen Temperaturmessung sind die mit dieser Wellenlängendetektionsmethode und den entsprechenden Geräten verbundenen hohen Investitionskosten für die Messgeräte und die damit im engen Zusammenhang stehende überdimensionierte Ausstattung der Geräte, die für die hier beschriebene Wellenlängendetektion nicht erforderlich wäre.

DE 198 21 616 A1 beschreibt eine Anordnung zur Bestimmung von Temperatur und Dehnung einer optischer Faser, die aus einer breitbandigen Lichtquelle, einem Faserkoppler zum Einkoppeln des Lichts der Lichtquelle in eine optische Faser mit einem oder mit mehreren Faser-Bragg-Gittern und zum Auskoppeln des an den Faser-Bragg-Gittern reflektierten Lichtes in eine weitere Glasfaser, sowie einer Auswerteeinrichtung zur Auswertung des in diese zweite Glasfaser eingekoppelten optischen Signales besteht. Dabei besteht diese Auswerteeinrichtung, mit der die zweite Glasfaser in Verbindung steht, ihrerseits aus einer Interferometeranordnung, die über einen optischen Eingang, zwei optische Teiler zur Aufteilung des Lichts in zwei Lichtwege, Mittel zur Erzeugung zweier Interferometerarme mit unterschiedlicher optischer Weglänge sowie über mindestens einen Phasenmodulator an einem der Interferometerarme verfügt. Die Interferometeranordnung liefert damit zwei optische Ausgänge, die in einem nachgeschalteten Spektralanalysator als dort eingehende Lichtbündel jeweils einer Spektralzerlegung unterworfen werden und nachfolgend zu zwei separaten Empfängeranordnungen geführt sind. Auch diese bekannte Anordnung, die ebenfalls einen speziellen Spektralanalysator erfordert, ist teuer, aufwändig und für eine reine Wellenlängendetektion im Ergebnis der Temperaturerfassung mittels eines Bragg-Gitters eigentlich überdimensioniert.

Aus der CN201892586U ist ein System zur Temperaturbestimmung in einem Transformator bekannt. Das System weist mehrere Glasfasern mit mehreren Bragg-Gittern auf, wobei die Glasfasern an unterschiedlichsten Stellen des Transformators angeordnet sind. Das Sensorsystem weist außerdem eine Auswerteinheit auf, mit deren Hilfe eine Auswertung der gemessenen Signale erfolgt. Das System ermöglicht eine Temperaturüberwachung des Transformators in Echtzeit und ermöglicht damit eine besonders wirtschaftliche Temperaturregelung.

Aus der CN102589747 ist ein Verfahren zur Temperaturüberwachung der oberen Ölschicht in einem Transformator mittels eines optischen Sensors bekannt. Der Sensor wird dabei von oben in den Transformator eingebracht. Durch Auswertung der von den Bragg-Gittern reflektierten Signale wird ein Temperaturverlauf bestimmt.

EP 1 178 295 A1 sowie DE 100 37 501 C1 beschreiben jeweils ein Verfahren und eine Vorrichtung zur Wellenlängendetektion bei der Temperaturerfassung mittels einer Glasfaser. Die Vorrichtung besteht dabei aus einer ersten Glasfaser, die ein eingeschriebenes Bragg-Gitter aufweist. Der Sensor, insbesondere der Messpunkt mit dem Bragg-Gitter, ist an einem Betriebsmittel, beispielsweise einem Hochspannungstransformator angeordnet, dessen Temperatur bestimmt werden soll. Weiterhin weist die Vorrichtung eine zweite Glasfaser auf, in die ebenfalls ein Bragg-Gitter eingeschrieben ist. Diese zweite Glasfaser verbindet eine Lichtquelle mit einem Photodetektor. Beide Glasfasern sind über einen Optokoppler miteinander verbunden. Bei der Temperaturmessung treffen die spezifischen Wellenlängen der beiden Bragg-Gitter im Optokoppler auf einander. Durch Veränderung der Wellenlänge des ersten Bragg-Gitters, aufgrund der sich ändernden Temperatur, wird beim Zusammentreffen ein Teil Wellenlängen reflektiert. Der nicht reflektierte Teil wird durch die zweite Glasfaser an den Photodetektor weitergeleitete. Anhand des reflektieren Teils wird dann eine Temperaturänderung ermittelt. Dieses Dokument bildet den Oberbegriff des ersten Anspruchs.

Ein besonders großer Nachteil der aus dem Stand der Technik bekannten Anordnung, ist die Ungenauigkeit der Messung. Da die Sensoren nur einen Messpunkt aufweisen und zur Bestimmung der Wicklungstemperatur bei Hochspannungstransformatoren eingesetzt werden, ist es notwendig, diese so genau wie möglich an einer Wicklung zu befestigen. Dies ist nicht einfach, da die Kupferleitungen eines Transformators meist mit ölgetränktem Papier umwickelt und von Isolieröl umgeben sind. Die Positionierung der Sensoren erfolgt bei der Herstellung der Transformatoren, also beim Aufwickeln der Spulen. Hier kommt es sehr häufig vor, dass die Sensoren verrutschen und damit den Kontakt zu den Wicklungen verlieren und somit die Temperatur des Isolieröls und nicht der Wicklungen messen. Die tatsächliche Temperatur der Wicklungen kann bis zu 15 Kelvin höher sein als die des umgebenden Isolieröls.

Aufgabe der Erfindung ist, einen Hochspannungstransformator mit Sensorsystem zur Überwachung von physikalischen Kenngrößen des Hochspannungstransformators bereitzustellen, der einfach aufgebaut ist, zuverlässig und genau Messungen der physikalischen Kenngrößen durchführt.

Diese Aufgabe wird durch einen Hochspannungstransformator mit Sensorsystem mit den Merkmalen des Anspruchs 1 gelöst. Die jeweiligen Unteransprüche betreffen weitere vorteilhafte Weiterbildungen der Erfindung.

Eine weitere Aufgabe der Erfindung ist, ein Verfahren für einen Hochspannungstransformator mit Sensorsystem zur Überwachung von physikalischen Kenngrößen bereitzustellen, mit dem einfach, zuverlässig und genau Messwerte der physikalischen Kenngrößen bestimmt werden.

Diese Aufgabe wird durch ein Verfahren zur Überwachung physikalischer Kenngrößen eines Hochspannungstransformators mit einem Sensorsystem gelöst, das die Merkmale des Anspruchs 7 umfasst. Die jeweiligen Unteransprüche betreffen weitere vorteilhafte Weiterbildungen des Verfahrens.

Der Erfindung liegt die allgemeine erfinderische Idee zu Grunde, die Sensoren des Sensorsystems mittels Abstandshalter zwischen aufeinanderfolgenden Wicklungen des Hochspannungstransformators anzuordnen. Weiterhin soll mit Hilfe von mehreren Bragg-Gittern im Sensorkopf sichergestellt werden, dass mindestens eines der Bragg-Gitter die tatsächlichen physikalischen Kenngrößen, wie Temperatur oder Anpresskraft, ermittelt.

Der erfindungsgemäße Hochspannungstransformator ist mit einem Sensorsystem zur Überwachung physikalischer Kenngrößen ausgestattet. Das Sensorsystem weist mindestens einen Sensor auf, der eine Glasfaser mit einem Sensorkopf umfasst. Der Sensorkopf hat zur Bestimmung der Temperatur und der Anpresskraft mehrere Bragg-Gitter ausgebildet. Die Bragg-Gitter werden mit allgemein bekannten Verfahren in den Sensorkopf der Glasfaser eingebracht. In die Glasfaser und somit in den Sensorkopf wird ein vorgegebenes Wellenlängenspektrum eingespeist. Dem Sensorsystem ist eine Auswerteeinheit zugeordnet, die über die Glasfaser mit dem mindestens einen Sensorkopf verbunden ist und von den Bragg-Gittern zurückkommendes Licht empfängt und auswertet. Zur genauen und reproduzierbaren Messung ist der mindestens eine Sensor mit einem Träger mechanisch fest verbunden. Der Träger ist zusammen mit dem Sensor zwischen zwei aufeinanderfolgenden Wicklungen des Hochspannungstransformators angeordnet und zwischen diesen eingespannt.

Jeder Sensorkopf besitzt ein erstes Bragg-Gitter mit einer ersten charakteristischen Bragg-Wellenlänge λ₁, ein zweites Bragg-Gitter mit einer zweiten charakteristischen Bragg-Wellenlänge λ₂ und ein drittes Bragg-Gitter mit einer dritten charakteristischen Bragg-Wellenlänge λ₃. In den einzelnen Sensorköpfen sind die Bragg-Gitter in einem definierten Abstand zueinander angeordnet. Bevorzugt liegt der Abstand in einem Bereich von größer 5mm bis kleiner 100 mm.

Das Sensorsystem zur Überwachung physikalischer Kenngrößen eines Hochspannungstransformators zeichnet sich dadurch aus, dass das Sensorsystem vier Sensoren mit je einem Sensorkopf umfasst. Jeder Sensorkopf trägt mehrere Bragg-Gitter. Eine Auswerteeinheit ist über je eine Glasfaser mit jedem der vier Sensoren verbunden. Jeder Sensor ist mit einem Träger mechanisch verbunden, wobei jeder Träger zwischen unterschiedlichen aufeinanderfolgenden Wicklungen des Hochspannungstransformators angeordnet ist.

Gemäß einer bevorzugten Ausführungsform besteht das Sensorsystem aus vier Sensoren, die jeweils über eine eigene Glasfaser mit der Auswerteeinheit verbunden sind. Die vier Sensoren sind an vier unterschiedlichen Positionen zwischen zwei aufeinanderfolgenden Wicklungen im Hochspannungstransformator angeordnet.

Die zu messenden physikalischen Kenngrößen sind die Temperatur zweier aufeinanderfolgender Wicklungen und/oder eine Anpresskraft zweier aufeinanderfolgender Wicklungen des Hochspannungstransformators.

Das erfindungsgemäße Verfahren zur Überwachung physikalischer Kenngrößen eines Hochspannungstransformators mit einem Sensorsystem umfasst die folgenden Schritte:
- dass in eine mit einem Sensorkopf eines Sensors verbundene Glasfaser Licht mit einem definierten Wellenlängenspektrum eingestrahlt wird;
- dass eine Verschiebung der Wellenlängenspektren eines jeden Bragg-Gitters in dem Sensorkopf des mindestens einen Sensors bestimmt und jeweils ein Messwert zugewiesen wird;
- dass die Messwerte miteinander verglichen werden und der maximale Messwert ermittelt wird;
- dass anhand des maximalen Messwertes eine Temperatur zwei aufeinanderfolgender Wicklungen des Hochspannungstransformator abgeleitet wird;
- dass eine Bragg-Wellenlänge λₘₐₓ desjenigen Bragg-Gitters mit dem maximalen Messwert bestimmt wird;
- dass die Bragg-Wellenlänge λₘₐₓ mit einer mechanisch unbelasteten Bragg-Wellenlänge λ_{unbelastet}, die als Richtwert dient, verglichen wird; und
- dass eine Anpressung (K) anhand des Unterschiedes zwischen der Bragg-Wellenlänge λₘₐₓ und der mechanisch unbelasteten Bragg-Wellenlänge λ_{unbelastet} abgeleitet wird.

Im Folgenden werden die Erfindung und ihre Vorteile anhand der beigefügten Figuren näher erläutert. Die Größenverhältnisse in den Figuren entsprechen nicht immer den realen Größenverhältnissen, da einige Formen vereinfacht und andere Formen zur besseren Veranschaulichung vergrößert im Verhältnis zu den anderen Elementen dargestellt sind. Dabei zeigen:
- Figur 1: eine Teilansicht des erfindungsgemäßen Hochspannungstransformators mit einem Sensorsystem;
- Figur 2: einen erfindungsgemäßen Hochspannungstransformator mit vier Sensoren des Sensorsystems; und
- Figur 3: einen Verfahrensablauf zur Bestimmung der physikalischen Kenngrößen, wie z.B. Temperatur und/oder Anpresskraft.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

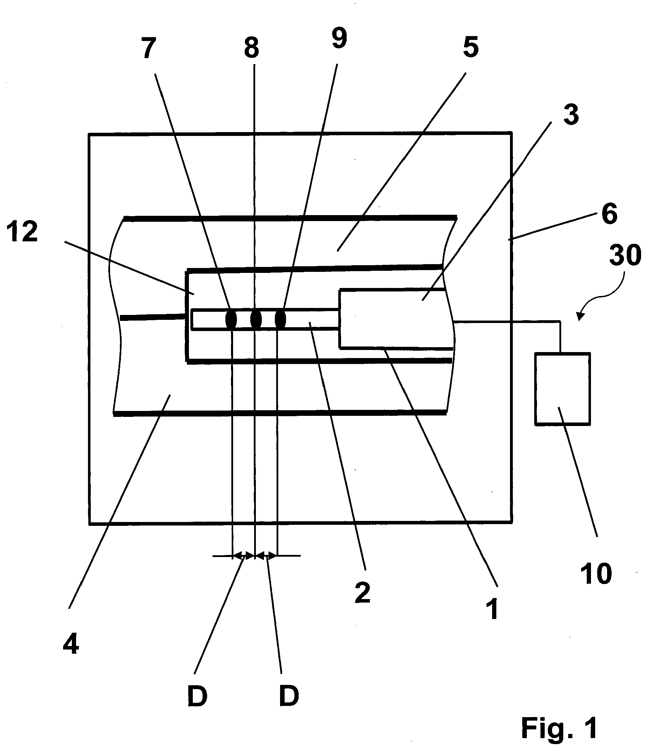

In Figur 1 ist ein erfindungsgemäßer Hochspannungstransformator 6 mit einem Sensorsystem 30 abgebildet. Das Sensorsystem 30 besteht aus mindestens einem Sensor, 1, der aus einer Glasfaser 3 besteht. Der Sensor 1 weist einen Sensorkopf 2 und die mit einer Isolation umgebene Glasfaser 3 auf. Der Sensorkopf 2 und ein Teil der Glasfaser 3 sind auf einem Träger 12 angebracht oder in einem Träger eingebettet. Der Träger 12 gewährleistet, dass der Sensor 1, insbesondere der Sensorkopf 2, beim Positionieren zwischen zwei aufeinanderfolgenden Wicklungen 4 und 5 des Hochspannungstransformators 6 nicht geknickt wird und somit auch einen sicheren und besseren Kontakt zu den Wicklungen 4 und 5 besitzt. Desweiteren gewährleistet die Paddelform des Sensors 1, dass die Leitung bei der Montage nicht geknickt wird.

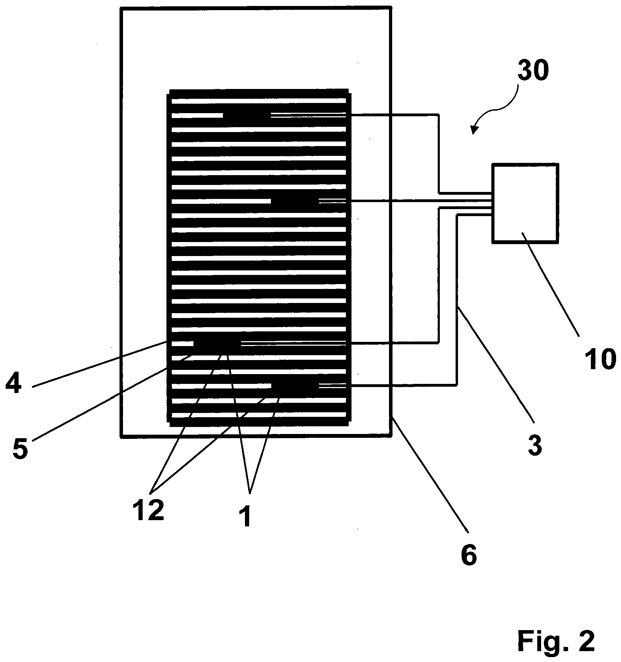

In Figur 2 ist ein Hochspannungstransformator 6 mit dem erfindungsgemäßen Sensorsystem 30 abgebildet. Das Sensorsystem 30 weist vier Sensoren 1 mit jeweils einem Träger 12 auf, die zwischen den Wicklungen 4 und 5 eingespannt sind. Alle Sensoren 1 sind über Glasfasern 3 mit einer Auswerteeinheit 10 verbunden. Ebenso kann ein vorgegebenes Wellenlängenspektrum in die jeweiligen Glasfasern 3 eingespeist werden. Das Wellenlängenspektrum dient zur Messung der physikalischen Kenngrößen des Hochspannungstransformators 6.

Der Sensorkopf 2, in Figur 1, weist ein erstes Bragg-Gitter 7 mit einer ersten charakteristischen Bragg-Wellenlänge λ₁, ein zweites Bragg-Gitter 8 mit einer zweiten charakteristischen Bragg-Wellenlänge λ₂ und ein drittes Bragg-Gitter 9 mit einer dritten charakteristischen Bragg-Wellenlänge λ₃ auf.

Diese Bragg-Gitter 7, 8, 9 sind in einem festgelegten Abstand D zueinander angeordnet. Vorteilhafterweise beträgt der Abstand D in diesem Ausführungsbeispiel 20 mm. Der Abstand D kann jedoch beliebig zwischen 5mm und 100mm variiert werden.

Beim Einbau des Sensors 1 in den Hochspannungstransformator 6 kommt es oft dazu, dass dieser verrutscht und somit nicht die Temperatur T zweier benachbarter Wicklungen 4, 5 sondern die des umgebenden Isolieröls misst. Durch die besonders vorteilhafte Positionierung des Sensors 1 auf dem Träger 12 wird erreicht, dass die drei Bragg-Gitter 7, 8, 9 des Sensorkopfs 2 genau zwischen zwei aufeinanderfolgenden Wicklungen 4 und 5 angeordnet sind. Somit wird erreicht, dass mindestens eines der Bragg-Gitter 7, 8, 9 des Sensorkopfs 2 an einer der Wicklungen 4, 5 anliegt und somit die tatsächliche Temperatur T der Wicklungen 4 oder 5 misst.

Beim Messverfahren zur Bestimmung der physikalischen Kenngröße, wie z.B. der Temperatur T zweier aufeinanderfolgender Wicklungen 4, 5 werden zunächst die Verschiebungen der Spektren in jedem Bragg-Gitter 7, 8, 9 durch eine Auswerteeinrichtung 10 bestimmt. Dabei wird dem ersten Bragg-Gitter 7 ein erster Messwert M₁, dem zweiten Bragg-Gitter 8 ein zweiter Messwert M₂ und einem dritten Bragg-Gitter 9 ein dritter Messwert M₃ zugewiesen. Im Anschluss werden die Messwerte M₁, M₂, M₃ miteinander in der Auswerteeinheit 10 verglichen, sodass der maximale Messwert Mₘₐₓ, d.h. der Messwert mit dem am stärksten verschobenen Spektrum als richtig angenommen wird. Im Anschluss wird aus diesem maximalen Messwert Mₘₐₓ in der Auswerteeinheit 10 eine Temperatur T abgeleitet, die der Temperatur der Wicklungen 4, 5 entspricht. Dies bedeutet, dass an diesem Messpunkt die Temperatur am höchsten ist.

Sobald auf den Sensor 1 Druck, also eine mechanische Kraft, wirkt, kommt es zu einer Änderung der Bragg-Wellenlänge λ₁, λ₂, λ₃ der jeweiligen Bragg-Gitter 7, 8, 9. Diesen Effekt nutzt das Verfahren zur Bestimmung einer weiteren physikalischen Kenngröße, nämlich der Anpresskraft K der Wicklungen 4 und 5 gegeneinander. Je stärker die Wicklungen 4, 5 gegeneinander gepresst sind, desto stärker ist die Änderung der Bragg-Wellenlänge λ₁, λ₂, λ₃ in dem bestimmten Bragg-Gitter 7, 8, 9. Dabei wird die Bragg-Wellenlänge λₘₐₓ des vorher bestimmten maximalen Messwertes Mₘₐₓ mit einem Richtwert, der der unbelasteten Bragg-Wellenlänge λ_{unbelastet} in einem unbelasteten Zustand entspricht, verglichen. Daraus wird die Anpresskraft K der Wicklungen 4, 5 gegeneinander bestimmt. Dies erfolgt ebenfalls in der Auswerteeinheit 10.

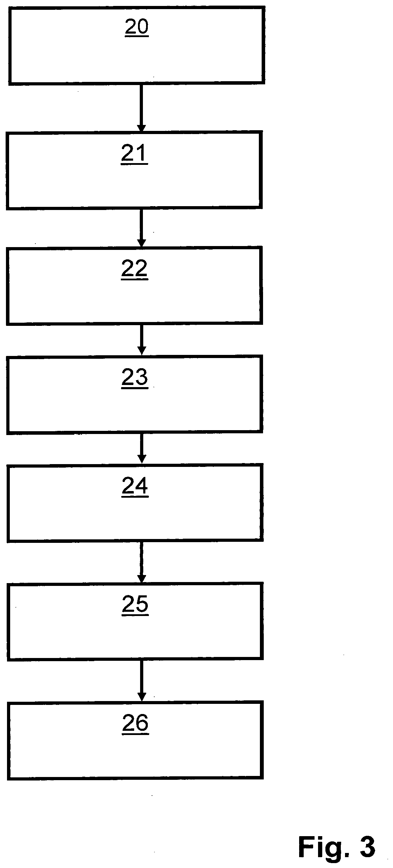

Bei dem erfindungsgemäßen Verfahren wird in die mit einem Sensorkopf 2 eines Sensors 1 verbundene Glasfaser 3 Licht mit einem definierten Wellenlängenspektrum eingestrahlt. Hierzu kann die Auswerteeinheit 10 auch dazu ausgebildet sein, dass von ihr Licht in die Glasfaser 3 eingespeist wird. Gemäß Figur 3, erfolgt zunächst in einem ersten Schritt 20 die Bestimmung der Verschiebung der Spektren in jedem der Bragg-Gitter 7, 8, 9 des Sensorkopfs 2. Anschließend erfolgt die Zuweisung 21 eines Messwerts M₁, M₂, M₃ für jedes der Bragg-Gitter 7, 8, 9. In einem Vergleichsschritt 22 werden die Messwerte M₁, M₂, M₃ miteinander zur Bestimmung des maximalen Messwertes Mₘₐₓ verglichen. Schließlich wird aus dem maximalen Messwert Mₘₐₓ eine Ableitung 23 eine Temperatur T anhand des maximalen Messwertes Mₘₐₓ abgeleitet. Die Bestimmung 24 der Bragg-Wellenlänge λₘₐₓ des Bragg-Gitters des Messpunkts erfolgt mit dem maximalen Messwert Mₘₐₓ In einem weiteren Vergleichsschritt 25 wird die Bragg-Wellenlänge λₘₐₓ mit einem Richtwert, der der unbetasteten Bragg-Wellenlänge λ_{unbelastet} entspricht, verglichen. Schließlich erfolgt das Ableiten 26 der Anpresskraft K anhand des Unterschiedes zwischen Bragg-Wellenlänge λₘₐₓ und unbelasteten Bragg-Wellenlänge λ_{unbelastet}. Der große Vorteil des erfindungsgemäßen Sensorsystems 30 liegt darin, dass zunächst die Gefahr, dass der Sensor 1 beim Verspannen der Windungen 4, 5 des Hochspannungstransformators 6 verrutscht, minimiert ist. Dadurch erreicht man, dass die drei Bragg-Gitter 7, 8, 9 des Sensorkopfs 2 richtig zwischen den zwei Wicklungen 4, 5 des Hochspannungstransformators 6 positioniert sind. Mindestens eines der Bragg-Gitter 7, 8, 9 hat die physikalische Kenngröße, nämlich die Temperatur T richtig und genau erfasst. Damit wird ein enormer Beitrag für eine sichere und zuverlässige Überwachung eines Hochspannungstransformators 6 und somit eines Energieversorgungsnetzes geleistet.

Durch die zusätzliche Möglichkeit der Überwachung der Anpresskraft K der Wicklungen 4, 5 aufeinander durch den gleichen Sensor 1 wird ein weiterer Sicherheitsaspekt erfüllt. Hersteller und auch Betreiber der Hochspannungstransformatoren 6 können den Festsitz der Wicklungen und damit den inneren Zustand eines Hochspannungstransformators 6 überprüfen, ohne den Hochspannungstransformator 6 dabei zu öffnen.

### Bezugszeichen

- 1: Sensor
- 2: Sensorkopf
- 3: Glasfaser
- 4: Wicklung
- 5: Wicklung
- 6: Hochspannungstransformator
- 7: erstes Bragg-Gitter
- 8: zweites Bragg-Gitter
- 9: drittes Bragg-Gitter
- 10: Auswerteeinheit
- 12: Träger
- 20: erster Schritt
- 21: Zuweisung
- 22: Vergleichsschritt
- 23: Ableitung der Temperatur
- 24: Bestimmung der Bragg-Wellenlänge λₘₐₓ
- 25: weiterer Vergleichsschritt
- 26: Ableiten der Anpresskraft
- 30: Sensorsystem
- D: Abstand
- K: Anpresskraft
- T: Temperatur

## Patentansprüche

1. Hochspannungstransformator (6) mit einem Sensorsystem (30) zur Überwachung physikalischer Kenngrößen, wobei
- das Sensorsystem (30) mindestens einen Sensor (1) aufweist, der eine Glasfaser (3) mit einem Sensorkopf (2) umfasst, der mehrere Bragg-Gitter (7, 8, 9) trägt,
- dem Sensorsystem (3) eine Auswerteeinheit (10) zuordenbar ist, die über die Glasfaser (3) mit dem mindestens einen Sensorkopf (2) verbindbar ist,
**dadurch gekennzeichnet, dass**
- der mindestens eine Sensor (1) einen Träger (12) aufweist und mit diesem mechanisch verbunden ist,
- der Träger (12) zwischen zwei aufeinanderfolgenden Wicklungen (4, 5) einer elektrischen Spule des Hochspannungstransformators (6) angeordnet ist.

2. Hochspannungstransformator (6) nach dem vorigen Anspruch, wobei
- der Sensorkopf (2) ein erstes Bragg-Gitter (7) mit einer ersten charakteristischen Bragg-Wellenlänge λ₁, ein zweites Bragg-Gitter (8) mit einer zweiten charakteristischen Bragg-Wellenlänge λ₂ und ein drittes Bragg-Gitter (9) mit einer dritten charakteristischen Bragg-Wellenlänge A₃ aufweist,
- die drei Bragg-Gitter (7, 8, 9) genau zwischen zwei aufeinanderfolgenden Wicklungen (4, 5) angeordnet sind, so dass mindestens eines der Bragg-Gitter (7, 8, 9) an einer der Wicklungen (4, 5) anliegt und die Temperatur der Wicklung (4) oder der Wicklung (5) misst.

3. Hochspannungstransformator (6) nach einem der vorigen Ansprüche, wobei
- der mindestens eine Sensor (1) zusammen mit dem Träger (12) zwischen den zwei aufeinanderfolgenden Wicklungen (4, 5) eingespannt ist.

4. Hochspannungstransformator (6) nach einem der vorangehenden Ansprüche, wobei
- das Sensorsystem (30) vier Sensoren (1) aufweist, die jeweils über eine eigene Glasfaser (3) mit der Auswerteeinheit (10) verbunden sind und die vier Sensoren (1) an vier unterschiedlichen Positionen zwischen je zwei aufeinander folgenden Wicklungen im Hochspannungstransformator (6) angeordnet sind.

5. Hochspannungstransformator (6) nach einem der vorangehenden Ansprüche, wobei
- eine physikalische Kenngröße eine Temperatur (T) zweier aufeinanderfolgender Wicklungen (4, 5) und/oder eine Anpresskraft (K) zweier aufeinanderfolgender Wicklungen (4, 5) ist.

6. Hochspannungstransformator (6) nach einem der vorangehenden Ansprüche, wobei
- die Bragg-Gitter (7, 8, 9) im Sensorkopf (2) in einem definierten Abstand (D) zueinander angeordnet sind,
- der Abstand (D) größer als 5 mm und kleiner als 100 mm ist oder 20 mm beträgt.

7. Verfahren zur Überwachung physikalischer Kenngrößen eines Hochspannungstransformators (6) mit einem Sensorsystem (30), umfassend folgende Schritte, dass:
- in eine, mit einem Sensorkopf (2), der Bragg-Gitter (7, 8, 9) aufweist, eines Sensors (1), der zwischen zwei aufeinanderfolgenden Wicklungen (4, 5) angeordnet ist, verbundene, Glasfaser (3) Licht mit einem vorgegebenen Wellenlängenspektrum eingestrahlt wird,
- das in die Glasfaser (3) eingestrahlte Licht in Bragg-Gittern (7, 8, 9) im Sensorkopf (2) mit einer jeweiligen charakteristischen Bragg-Wellenlänge (λ₁, λ₂, λ₃) je Bragg-Gitter (7, 8, 9) reflektiert wird;
- eine jeweilige Änderung der charakteristischen Bragg-Wellenlänge (λ₁, λ₂, λ₃) bestimmt und der jeweiligen Änderung ein Messwert (M₁, M₂, M₃) zugewiesen wird;
- die Messwerte (M₁, M₂, M₃) miteinander verglichen werden und der maximale Messwert (Mₘₐₓ) ermittelt wird;
- eine Temperatur (T) der zwei aufeinanderfolgenden Wicklungen (4, 5) des Hochspannungstransformators (6) aus der Temperatur gemäß dem maximalen Messwert (Mₘₐₓ) abgeleitet wird, wobei die Temperatur (T) der aufeinanderfolgenden Wicklungen (4, 5) im Wesentlichen der Temperatur gemäß dem maximalen Messwert (Mₘₐₓ) entspricht;
- eine Bragg-Wellenlänge λₘₐₓ desjenigen Bragg-Gitters (7, 8, 9) mit dem maximalen Messwert (Mₘₐₓ) bestimmt wird;
- die Bragg-Wellenlänge λₘₐₓ mit einer mechanisch unbelasteten Bragg-Wellenlänge λ_{unbelastet} für das Bragg-Gitter (7, 8, 9) mit dem maximalen Messwert (Mₘₐₓ) verglichen wird, wobei die mechanisch unbelastete Bragg-Wellenlänge λ_{unbelastet} als Richtwert dient; und
- eine Anpressung (K) anhand des Unterschiedes zwischen der Bragg-Wellenlänge λₘₐₓ und der mechanisch unbelasteten Bragg-Wellenlänge λ_{unbelastet} abgeleitet wird.

8. Verfahren nach dem vorigen Anspruch, wobei
- das Sensorsystem (30) vier Sensoren (1) aufweist, die jeweils über eine eigene Glasfaser (3) mit der Auswerteeinheit (10) verbunden werden,
- die vier Sensoren (1) an vier unterschiedlichen Positionen zwischen je zwei aufeinander folgenden Wicklungen im Hochspannungstransformator (6) angeordnet werden und jeder Sensorkopf (2) ein erstes Bragg-Gitter (7) mit einer ersten charakteristischen Bragg-Wellenlänge λ₁, ein zweites Bragg-Gitter (8) mit einer zweiten charakteristischen Bragg-Wellenlänge λ₂ und ein drittes Bragg-Gitter (9) mit einer dritten charakteristischen Bragg-Wellenlänge λ₃ aufweist.

9. Verfahren nach Anspruch 7 oder 8, wobei
- das Licht von der Auswerteeinheit (10) in die Glasfaser (3) eingespeist wird.

## Claims

1. High voltage transformer (6) with a sensor system (30) for monitoring physical characteristic variables, wherein
- the sensor system (30) comprises at least one sensor (1), which comprises an optical fibre (30) with a sensor head (2) carrying a plurality of Bragg gratings (7, 8, 9), and
- an evaluating unit (10) connected with the at least one sensor head (2) by way of the optical fibre (3) is associated with the sensor system (3),
**characterised in that**
- the at least one sensor (1) comprises a support (12) and is mechanically connected therewith and
- the support (12) is arranged between two successive windings (4, 5) of an electrical coil of the high voltage transformer (6).

2. High voltage transformer (6) according to the preceding claim, wherein
- the sensor head (2) comprises a first Bragg grating (7) with a first characteristic Bragg wavelength λ₁, a second Bragg grating (8) with a second characteristic Bragg wavelength λ₂ and a third Bragg grating (9) with a third characteristic Bragg wavelength λ₃ and
- the three Bragg gratings (7, 8, 9) are arranged exactly between two successive windings (4, 5) so that at least one of the Bragg gratings (7, 8, 9) bears against one of the windings (4, 5) and measures the temperature of the winding (4) or the winding (5).

3. High voltage transformer (6) according to one of the preceding claims, wherein
- the at least one sensor (1) together with the support (12) is clamped in place between the two successive windings (4, 5) of the high voltage transformer (6).

4. High voltage transformer (6) according to any one of the preceding claims, wherein
- the sensor system (30) comprises four sensors (1) each connected with the evaluating unit (10) by way of an individual optical fibre (3) and the four sensors (1) are arranged at four different positions between two successive windings in the high voltage transformer (6).

5. High voltage transformer (6) according to any one of the preceding claims, wherein
- a physical characteristic value is a temperature (T) of two successive windings (4, 5) and/or a contact pressing force (K) of two successive windings (4, 5).

6. High voltage transformer (6) according to any one of the preceding claims, wherein
- the Bragg gratings (7, 8, 9) are arranged in the sensor head (2) at a defined spacing (D) from one another and
- the spacing (D) is greater than 5 millimetres to less than 100 millimetres or 20 millimetres.

7. Method of monitoring physical characteristic variables of a high voltage transformer (6) with a sensor system (30), comprising the following steps:
- light with a defined wavelength spectrum is radiated into an optical fibre (3) connected with a sensor head (2), which comprises Bragg gratings (7, 8, 9) of a sensor (1), which is arranged between two successive windings (4, 5);
- the light radiated into the optical fibre (3) is reflected in Bragg gratings (7, 8, 9) in the sensor head (2) with a respective characteristic Bragg wavelength (λ₁, λ₂, λ₃) per Bragg grating (7, 8, 9);
- a respective change in the characteristic Bragg wavelength (λ₁, λ₂, λ₃) is determined and a measured value (M₁, M₂, M₃) is assigned to the respective change;
- the measured values (M₁, M₂, M₃) are compared with one another and the maximum measured value (Mₘₐₓ) is determined;
- a temperature (T) of the two successive windings (4, 5) of the high voltage transformer (6) is derived from the temperature according to the maximum measured value (Mₘₐₓ), wherein the temperature (T) of the successive windings (4, 5) substantially corresponds with the temperature accoding to the maximum measured value (Mₘₐₓ);
- a Bragg wavelength λₘₐₓ of that Bragg grating (7, 8, 9) with the maximum measured value (Mₘₐₓ) is determined;
- the Bragg wavelength λₘₐₓ is compared with a mechanically unloaded Bragg wavelength λ_{unloaded}, for the Bragg grating (7, 8, 9) with the maximum measured value (Mmax), wherein the mechanically unloaded Bragg wavelength λ_{unloaded} serves as a standard value; and
- a contact pressure (K) is derived by way of the difference between the Bragg wavelength λₘₐₓ and the mechanically unloaded Bragg wavelength λ_{unloaded}.

8. Method according to claim 8, wherein
- the sensor system (30) comprises four sensors (1) each connected with the evaluating unit (10) by way of a respective individual optical fibre (3),
- the four sensors (1) are arranged at four different positions between two successive windings in the high voltage transformer (6) and each sensor head (2) comprises a first Bragg grating (7) with a first characteristic Bragg wavelength λ₁, a second Bragg grating (8) with a second characteristic Bragg wavelength λ₂ and a third Bragg grating (9) with a third characteristic Bragg wavelength λ₃.

9. Method according to claim 7 or 8, wherein
- the light is fed from the evaluating unit (10) into the optical fibre (3).

## Revendications

1. Transformateur haute tension (6) comprenant un système de capteurs (30) permettant de surveiller des grandeurs physiques, caractéristiques dans lequel :
- le système de capteurs (30) comprend au moins un capteur (1) qui comporte une fibre de verre (3) ayant une tête de capteur (2) portant plusieurs réseaux de Bragg (7, 8, 9),
- au système de capteurs (3) peut être associée une unité d'exploitation (10) qui peut être reliée à la tête de capteur (2) par l'intermédiaire de la fibre de verre (3),
**caractérisé en ce que**
- le capteur (1) comporte un support (12) avec lequel il est mécaniquement lié,
- le support (12) est monté entre deux enroulements successifs (4, 5) d'une bobine électrique du transformateur haute tension (6).

2. Transformateur haute tension (6) conforme à la revendication précédente, dans lequel
- la tête de capteur (2) comporte un premier réseau de Bragg (7) ayant une première longueur d'onde de Bragg caractéristique (λ₁), un second réseau de Bragg (8) ayant une seconde longueur d'onde de Bragg caractéristique (λ₂), et un troisième réseau de Bragg (9) ayant une troisième longueur d'onde de Bragg caractéristique (λ₃),
- les trois réseaux de Bragg (7, 8, 9) sont montés exactement entre deux enroulements successifs (4, 5) de sorte qu'au moins l'un des réseaux de Bragg (7, 8, 9) s'applique sur l'un des enroulements (4, 5) et mesure la température de l'enroulement (4) ou de l'enroulement (5).

3. Transformateur haute tension (6) conforme à l'une des revendications précédentes, dans lequel le capteur (1) est encastré avec le support (12) entre les deux enroulements successifs (4, 5).

4. Transformateur haute tension (6) conforme à l'une des revendications précédentes, dans lequel le système de capteurs (30) comporte quatre capteurs (1) qui sont respectivement reliés à l'unité d'exploitation (10) par l'intermédiaire d'une fibre de verre (3) propre, et les quatre capteurs (1) sont montés dans le transformateur haute tension dans quatre positions différentes entre respectivement deux enroulements successifs.

5. Transformateur haute tension (6) conforme à l'une des revendications précédentes, dans lequel la grandeur physique caractéristique est constituée par la température (T) de deux enroulements (4, 5) successifs et/ou la force de pression (K) de deux enroulements successifs (4, 5).

6. Transformateur haute tension (6) conforme à l'une des revendications précédentes, dans lequel :
- les réseaux de Bragg (7, 8, 9) sont montés dans la tête de capteur (2) à une distance (D) définie les uns par rapport aux autres,
- la distance (D) est supérieure à 5 mm et inférieure à 100 mm ou est égale à 20 mm.

7. Procédé permettant de surveiller des grandeurs physiques caractéristiques d'un transformateur haute tension (6) à l'aide d'un système de capteurs (30) comprenant les étapes suivantes selon lesquelles :
- dans une fibre de verre (3) reliée à une tête de capteur (2) comportant des réseaux de Bragg (7, 8, 9) d'un capteur (1) qui est monté entre deux enroulements (4, 5) successifs, de la lumière ayant un spectre de longueurs d'ondes prédéfini est rayonnée,
- la lumière rayonnée dans la fibre de verre (3) est réfléchie dans les réseaux de Bragg (7, 8, 9) situés dans la tête de capteur (2) avec une longueur d'onde de Bragg caractéristique respective (λ₁, λ₂, λ₃) par réseau de Bragg (7, 8, 9),
- une variation respective des longueurs d'onde de Bragg caractéristiques (λ₁, λ₂, λ₃) est déterminée et à cette variation respective, est attribuée une valeur de mesure (M₁, M₂, M₃),
- les valeurs de mesure (M₁, M₂, M₃) sont comparées les unes aux autres et la valeur de mesure maximum (Mₘₐₓ) est déterminée,
- la température (T) des deux enroulements successifs (4, 5) du transformateur haute tension (6) est déduite de la température selon la valeur de mesure maximum (Mₘₐₓ), la température (T) des enroulements successifs (4, 5) correspondant essentiellement à la température selon la valeur de mesure maximum (Mₘₐₓ),
- la longueur d'onde de Bragg (λₘₐₓ) de chaque réseau de Bragg (7, 8, 9) est déterminée avec la valeur de mesure maximum (Mₘₐₓ),
- la longueur d'onde de Bragg (λₘₐₓ) est comparée à une longueur d'onde de Bragg non chargée mécaniquement (λ_{unbelastet}) du réseau de Bragg (7, 8, 9) ayant la valeur de mesure maximum (Mₘₐₓ), la longueur d'onde de Bragg non chargée mécaniquement (λ_{unbelastet}) servant de valeur de référence, et
- la force de pression (K) est déduite de la différence entre la longueur d'onde de Bragg (λₘₐₓ) et la longueur d'onde de Bragg non chargée mécaniquement (λ_{unbelastet}).

8. Procédé conforme à la revendication précédente selon lequel :
- le système de capteurs (30) comporte quatre capteurs (1) qui sont respectivement reliés à l'unité d'exploitation (10) par l'intermédiaire d'une fibre de verre propre (3),
- les quatre capteurs (1) sont montés dans le transformateur haute tension (6) dans quatre positions différentes entre respectivement deux enroulements successifs, et chaque tête de capteur (2) comporte un premier réseau de Bragg (7) ayant une première longueur d'onde de Bragg caractéristique (λ₁), un second réseau de Bragg (8) ayant une seconde longueur d'onde de Bragg caractéristique (λ₂) et un troisième réseau de Bragg (9) ayant une troisième longueur d'onde de Bragg caractéristique (λ₃).

9. Procédé conforme à la revendication 7 ou 8 selon lequel la lumière provenant de l'unité d'exploitation (10) alimente la fibre de verre (3).
